(19) Europäisches Patentamt
European Patent Office
Office européen des brevets

(11) EP 2 614 644 B1

(12) EUROPEAN PATENT SPECIFICATION

(45) Date of publication and mention
of the grant of the patent:
**27.03.2019 Bulletin 2019/13**

(51) Int Cl.:
*H04N 19/105* (2014.01)   *H04N 19/176* (2014.01)
*H04N 19/147* (2014.01)   *H04N 19/46* (2014.01)
*H04N 19/51* (2014.01)    *H04N 19/13* (2014.01)
*H04N 19/61* (2014.01)    *H04N 19/60* (2014.01)
*H04N 19/593* (2014.01)   *H04N 19/91* (2014.01)
*H04N 19/44* (2014.01)    *H04N 19/615* (2014.01)

(21) Application number: **11757724.7**

(22) Date of filing: **09.09.2011**

(86) International application number:
**PCT/US2011/050921**

(87) International publication number:
**WO 2012/033968 (15.03.2012 Gazette 2012/11)**

(54) **ENCODING OF THE LINK TO A REFERENCE BLOCK IN VIDEO COMPRESSION BY IMAGE CONTENT BASED SEARCH AND RANKING**

KODIERUNG DES REFERENZBLOCKVERWEISES IN DER VIDEOKOMPRESSION DURCH BILDINHALTBASIERTE SUCHE UND BILDINHALTBASIERTES RANKING

CODAGE DU LIEN À UN BLOC DE RÉFÉRENCE POUR LA COMPRESSION VIDÉO PAR RECHERCHE ET CLASSEMENT BASÉS SUR LE CONTENU D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.09.2010 US 403138 P**

(43) Date of publication of application:
**17.07.2013 Bulletin 2013/29**

(73) Proprietor: **InterDigital Madison Patent Holdings**
**75017 Paris (FR)**

(72) Inventor: **ZHANG, Dong-Qing**
**Plainsboro**
**New Jersey 08536 (US)**

(74) Representative: **Vidon Brevets & Stratégie**
**16B, rue de Jouanet**
**BP 90333**
**35703 Rennes Cedex 7 (FR)**

(56) References cited:
**FR-A1- 2 941 581     US-A1- 2009 180 538**

• **QIN Z ET AL: "A pattern-based lossy compression scheme for document images", ELECTRONIC PUBLISHING, vol. 8, no. 2-3, 24 September 1996 (1996-09-24), pages 221-233, XP002246353, Wiley, Chichester, GB ISSN: 0894-3982**
• **MOFFAT A ET AL: "Chapter 3. Static Codes", COMPRESSION AND CODING ALGORITHMS, February 2002 (2002-02), pages 29-50, XP002312370,**

**Description**

This application claims the benefit of U.S. Provisional Application Serial No. 61/403138 entitled EFFICIENT REFERENCE DATA CODING FOR VIDEO COMPRESSION BY IMAGE CONTENT BASED SEARCH AND RANKING filed on Sept. 10, 2010 (Technicolor Docket No. PU100195).

This application is related to the following co-pending, commonly-owned, patent applications:

(1) International (PCT) Patent Application Serial No. PCT/US11/000107 entitled A SAMPLING-BASED SUPER-RESOLUTION APPROACH FOR EFFICIENT VIDEO COMPRESSION filed on Jan. 20, 2011 (Technicolor Docket No. PU100004);

(2) International (PCT) Patent Application Serial No. PCT/US11/000117 entitled DATA PRUNING FOR VIDEO COMPRESSION USING EXAMPLE-BASED SUPER-RESOLUTION filed on Jan. 21, 2011 (Technicolor Docket No. PU100014);

(3) International (PCT) Patent Application Serial No. XXXX entitled METHODS AND APPARATUS FOR ENCODING VIDEO SIGNALS USING MOTION COMPENSATED EXAMPLE-BASED SUPER-RESOLUTION FOR VIDEO COMPRESSION filed on September XX, 2011 (Technicolor Docket No. PU100190);

(4) International (PCT) Patent Application Serial No. XXXX entitled METHODS AND APPARATUS FOR DECODING VIDEO SIGNALS USING MOTION COMPENSATED EXAMPLE-BASED SUPER-RESOLUTION FOR VIDEO COMPRESSION filed on September XX, 2011 (Technicolor Docket No. PU100266);

(5) International (PCT) Patent Application Serial No. XXXX entitled METHODS AND APPARATUS FOR ENCODING VIDEO SIGNALS USING EXAMPLE-BASED DATA PRUNING FOR IMPROVED VIDEO COMPRESSION EFFICIENCY filed on September XX, 2011 (Technicolor Docket No. PU100193);

(6) International (PCT) Patent Application Serial No. XXXX entitled METHODS AND APPARATUS FOR DECODING VIDEO SIGNALS USING EXAMPLE-BASED DATA PRUNING FOR IMPROVED VIDEO COMPRESSION EFFICIENCY filed on September XX, 2011 (Technicolor Docket No. PU100267);

(7) International (PCT) Patent Application Serial No. XXXX entitled METHODS AND APPARATUS FOR ENCODING VIDEO SIGNALS FOR BLOCK-BASED MIXED-RESOLUTION DATA PRUNING filed on September XX, 2011 (Technicolor Docket No. PU100194);

(8) International (PCT) Patent Application Serial No. XXXX entitled METHODS AND APPARATUS FOR DECODING VIDEO SIGNALS FOR BLOCK-BASED MIXED-RESOLUTION DATA PRUNING filed on September XX, 2011 (Technicolor Docket No. PU100268);

(9) International (PCT) Patent Application Serial No. XXXX entitled METHOD AND APPARATUS FOR EFFICIENT REFERENCE DATA DECODING FOR VIDEO COMPRESSION BY IMAGE CONTENT BASED SEARCH AND RANKING filed on September XX, 2011 (Technicolor Docket No. PU110106);

(10) International (PCT) Patent Application Serial No. XXXX entitled METHOD AND APPARATUS FOR ENCODING VIDEO SIGNALS FOR EXAMPLE-BASED DATA PRUNING USING INTRA-FRAME PATCH SIMILARITY filed on September XX, 2011 (Technicolor Docket No. PU100196);

(11) International (PCT) Patent Application Serial No. XXXX entitled METHOD AND APPARATUS FOR DECODING VIDEO SIGNALS WITH EXAMPLE-BASED DATA PRUNING USING INTRA-FRAME PATCH SIMILARITY filed on September XX, 2011 (Technicolor Docket No. PU100269); and

(12) International (PCT) Patent Application Serial No. XXXX entitled PRUNING DECISION OPTIMIZATION IN EXAMPLE-BASED DATA PRUNING COMPRESSION filed on September XX, 2011 (Technicolor Docket No. PU10197).

The present principles relate generally to video encoding and decoding and, more particularly, to methods and apparatus for efficient reference data coding for video compression by image content based search and ranking.

In block-based video coding schemes, such as the International Organization for Standardization/International Electrotechnical Commission (ISO/IEC) Moving Picture Experts Group-4 (MPEG-4) Part 10 Advanced Video Coding (AVC) Standard/International Telecommunication Union, Telecommunication Sector (ITU-T) H.264 Recommendation (hereinafter the "MPEG-4 AVC Standard"), the encoding and/or decoding of an image block is often facilitated by the prediction from another similar block (referred to herein as a "reference block"). Side information that indicates the location of the reference block therefore has to be sent to the decoder side. For purposes of generality, such reference information is referred as "reference data". Examples of reference data include motion vectors in the MPEG-4 AVC Standard and in other MPEG-based coding schemes, disparity values in multi-view coding schemes, and spatial displacement vectors in video compression schemes using spatial block prediction.

In traditional video encoding schemes, reference data such as motion vectors are encoded using entropy coding. In general, the encoding of motion vectors is independent of the image content.

US2009/180538A1 and FR2941581A1 is further prior-art.

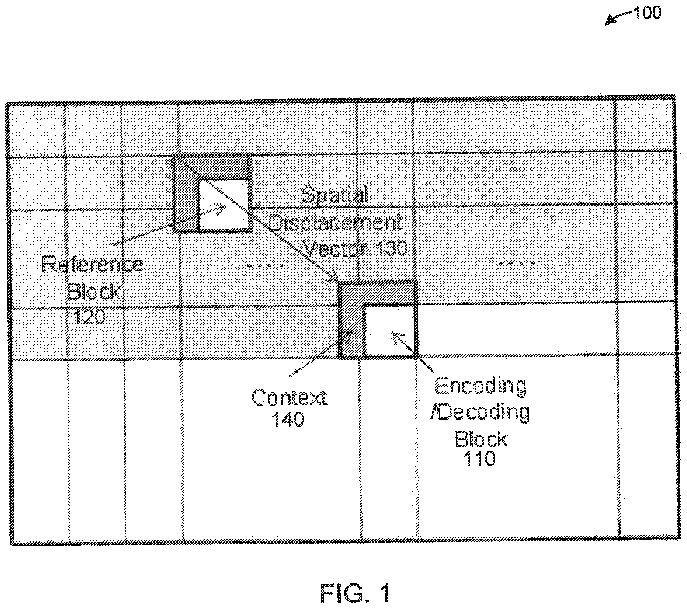

More recently, a method called template matching has been proposed to improve video coding efficiency. The template matching method is a type of intra-coding scheme, which uses a reference block located somewhere in a video frame to predict the current coding block. Unlike the conventional MPEG-4 AVC Standard intracoding scheme, which only uses the content of neighboring blocks to predict the current coding block, the reference block in the template matching method can be non-neighboring with respect to the current coding block, which makes the template matching method more flexible and efficient for coding. Another feature of the template matching method is that it does not need to encode spatial displacement vectors (the relative coordinates between the reference block and the current block). The template matching method uses the context of the encoding block to find the best match block as the reference block. The context of a block is usually a set of pixels surrounding the block. Turning to FIG. 1, an example of context matching and a corresponding spatial displacement vector is indicated generally by the reference numeral 100. A current block to be encoded/decoded is indicated by the reference numeral 110. A reference block is indicated by the reference numeral 120. A spatial displacement vector from the reference block 120 to the current block 110 is indicated by the reference numeral 130. A context is indicated by the reference numeral 140. Thus, the template matching method relies only on contexts to find reference blocks. However, it is possible that two blocks have a similar context but have very different appearances, therefore using the context to find the reference block may be unreliable in many situations.

These and other drawbacks and disadvantages of the prior art are addressed by the present principles, which are directed to methods and apparatus for efficient reference data coding for video compression by image content based search and ranking.

The invention is defined by the appended claims.

According to an aspect of the present principles, an apparatus is provided. The apparatus includes a rank transformer for respectively transforming reference data for each of a plurality of candidate reference blocks with respect to a current block to be encoded into a respective rank number there for based on a context feature of the current block with respect to the context feature of each of the plurality of candidate reference blocks. The apparatus further includes an entropy encoder for respectively entropy encoding the respective rank number for each of the plurality of candidate reference blocks with respect to the current block in place of, and representative of, the reference data for each of the plurality of candidate reference blocks with respect to the current block.

According to another aspect of the present principles, a method is provided. The method includes respectively transforming reference data for each of a plurality of candidate reference blocks with respect to a current block to be encoded into a respective rank number there for based on a context feature of the current block with respect to the context feature of each of the plurality of candidate reference blocks. The method further includes respectively entropy encoding the respective rank number for each of the plurality of candidate reference blocks with respect to the current block in place of, and representative of, the reference data for each of the plurality of candidate reference blocks with respect to the current block.

According to yet another aspect of the present principles, an apparatus is provided. The apparatus includes an entropy decoder for respectively entropy decoding an encoded respective rank number for each of a plurality of candidate reference blocks with respect to a current block to be decoded to obtain a decoded respective rank number there for. The encoded respective rank number is in place of, and representative of, respective reference data for each of the plurality of candidate reference blocks with respect to the current block. The apparatus further includes an inverse rank transformer for respectively transforming the decoded respective rank number for each of the plurality of candidate reference blocks with respect to the current block into the respective reference data there for based on a context feature of the current block with respect to the context feature of each of the plurality of candidate reference blocks.

According to still another aspect of the present principles, a method is provided. The method includes respectively entropy decoding an encoded respective rank number for each of a plurality of candidate reference blocks with respect to a current block to be decoded to obtain a decoded respective rank number there for. The encoded respective rank number is in place of, and representative of, respective reference data for each of the plurality of candidate reference blocks with respect to the current block. The method further includes respectively transforming the decoded respective rank number for each of the plurality of candidate reference blocks with respect to the current block into the respective reference data there for based on a context feature of the current block with respect to the context feature of each of the plurality of candidate reference blocks.

According to a further aspect of the present principles, an apparatus is provided. The apparatus includes means for respectively transforming reference data for each of a plurality of candidate reference blocks with respect to a current block to be encoded into a respective rank number there for based on a context feature of the current block with respect to the context feature of each of the plurality of candidate reference blocks. The apparatus further includes means for respectively entropy encoding the respective rank number for each of the plurality of candidate reference blocks with respect to the current block in place of, and representative of, the reference data for each of the plurality of candidate reference blocks with respect to the current block.

According to an additional aspect of the present principles, an apparatus is provided. The apparatus includes means for respectively entropy decoding an encoded respective rank number for each of a plurality of candidate reference blocks with respect to a current block to be decoded to obtain a decoded respective rank number there for. The encoded respective rank number is in place of, and representative of, respective reference data for each of the plurality of candidate reference blocks with respect to the current block. The apparatus further includes means for respectively transforming the decoded respective rank number for each of the plurality of candidate reference blocks with respect to the current block into the respective reference data there for based on a context feature of the current block with respect to the context feature of each of the plurality of candidate reference blocks.

These and other aspects, features and advantages of the present principles will become apparent from the following detailed description of exemplary embodiments, which is to be read in connection with the accompanying drawings.

The present principles may be better understood in accordance with the following exemplary figures, in which:

FIG. 1 is a diagram showing an example of context matching and a corresponding spatial displacement vector, in accordance with the prior art;

FIG. 2 is a block diagram showing an exemplary apparatus for encoding reference data, in accordance with an embodiment of the present principles;

FIG. 3 is a flow diagram showing an exemplary method for encoding reference data, in accordance with an embodiment of the present principles;

FIG. 4 is a block diagram showing an exemplary apparatus for decoding reference data, in accordance with an embodiment of the present principles;

FIG. 5 is a flow diagram showing an exemplary method for decoding reference data, in accordance with an embodiment of the present principles;

FIG. 6 is a diagram showing an exemplary rank transform for transforming reference data to a rank number, in accordance with an embodiment of the present principles; and

FIG. 7 is a flow diagram showing an exemplary method for transforming reference data to a rank number, in accordance with an embodiment of the present principles.

The present principles are directed to methods and apparatus for efficient reference data coding for video compression by image content based search and ranking.

The present description illustrates the present principles. It will thus be appreciated that those skilled in the art will be able to devise various arrangements that, although not explicitly described or shown herein, embody the present principles and are included within its scope.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

Also, as used herein, the words "picture" and "image" are used interchangeably and refer to a still image or a picture from a video sequence. As is known, a picture may be a frame or a field.

As noted above, the present principles are directed to methods and apparatus for efficient reference data coding for video compression by image content based search and ranking. For example, in an embodiment, a unique scheme is disclosed to encode reference data such as, but not limited to, motion vectors. The reference data may be encoded, for example, using content based search, ranking, and rank number encoding.

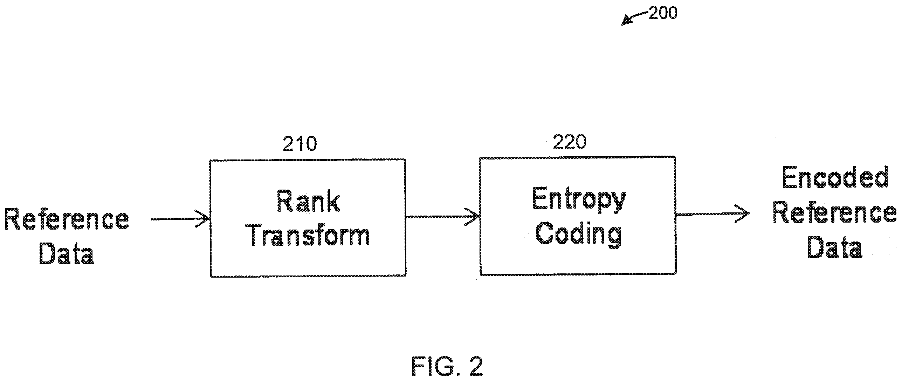

Turning to FIG. 2, an exemplary apparatus for encoding reference data is indicated generally by the reference numeral 200. The apparatus 200 includes a rank transformer 210 and an entropy coder 220. An output of the rank transformer 210 is connected in signal communication with an input of the entropy coder 220. An input of the rank transformer 210 is available as an input to the apparatus 200, for receiving context features (not shown) and reference data. An output of the entropy coder 220 is available as an output of the apparatus 200, for outputting encoded reference data.

In sum, the reference data is first transformed into rank numbers by the rank transformer 210 using the rank transform process described below. Then an entropy coding process is used by the entropy coder 220 to encode the rank numbers. The entropy coding process may use, for example, Golomb code or some other code.

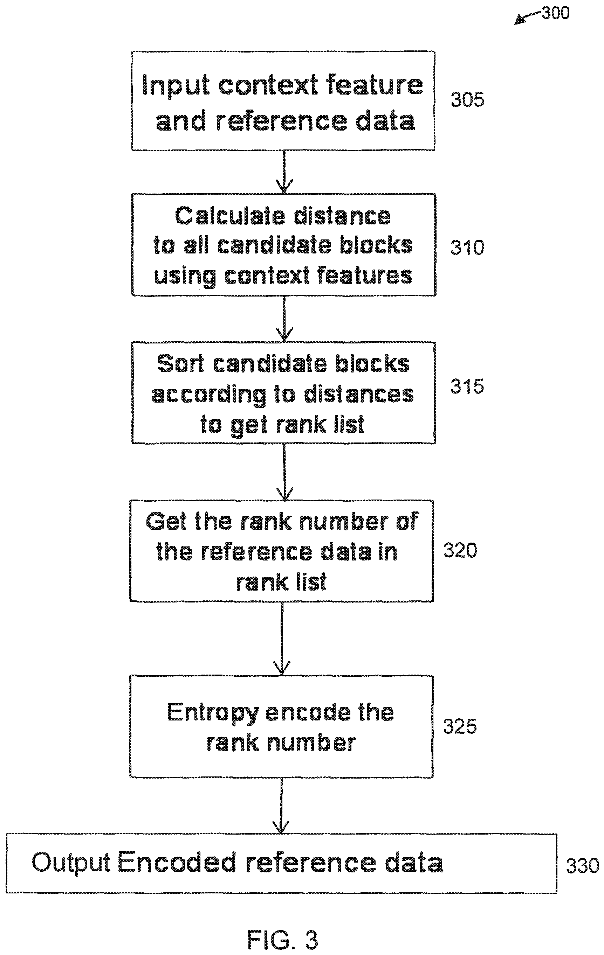

Turning to FIG. 3, an exemplary method for encoding reference data is indicated by the reference numeral 300. At step 305, context features and reference data are input. At step 310, the distance to all candidate blocks is calculated using the context features. At step 315, the candidate blocks are sorted according to the distances (calculated at step 310) to obtain the rank list. At step 320, the rank number of the reference data in the rank list is obtained. At step 325, the rank number is entropy encoded. At step 330, the encoded reference data, namely the entropy encoded rank number, is output.

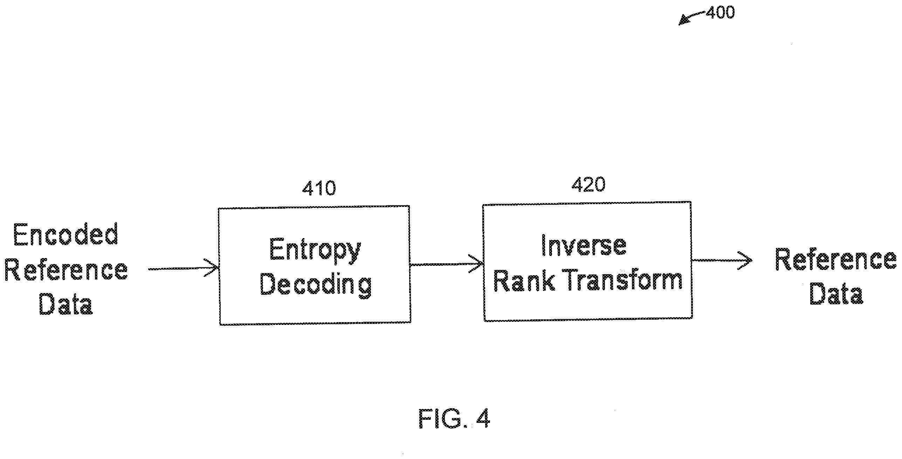

Turning to FIG. 4, an exemplary apparatus for decoding reference data is indicated generally by the reference numeral 400. The apparatus 400 includes an entropy decoder 410 and an inverse rank transformer 420. An output of the entropy decoder 410 is connected in signal communication with an input of the inverse rank transformer 420. An input of the entropy decoder 410 is available as an input to the apparatus 400, for receiving encoded reference data. An output of the inverse rank transformer 420 is available as an output of the apparatus 400, for outputting (decoded) reference data.

The received encoded data is first decoded by the entropy decoder 410, resulting in rank numbers. The inverse rank transformer 420 then takes the rank numbers and outputs the corresponding reference block. The inverse rank transform process is similar to the rank transform described below. The context feature $F_e$ of the decoding block is matched with the features in the context feature set $\mathcal{F} = \{F_1, F_2, \ldots, F_N\}$ by distance calculation. Each feature in the context feature set is corresponding to a reference block. Then the context feature set is sorted, resulting in a search rank list. The decoded rank number $R$ then is used to retrieve the "correct" reference block, which is located at the $R^{th}$ entry in the rank list.

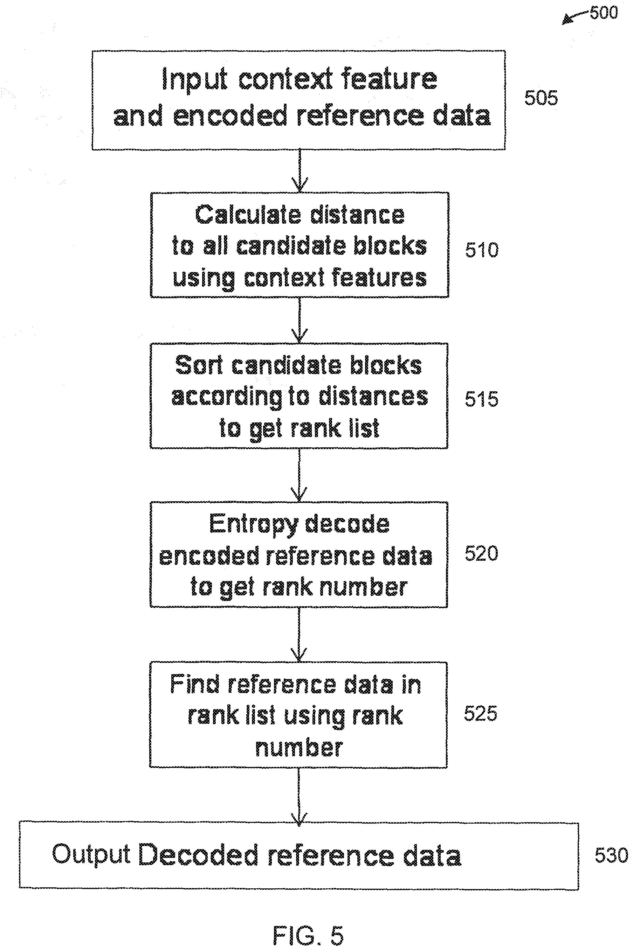

Turning to FIG. 5, an exemplary method for decoding reference data is indicated generally by the reference numeral 500. At step 505, context features and encoded reference data are input. At step 510, the distances to all candidate blocks are calculated using the context features. At step 515, the candidate blocks are sorted according to the distances (calculated at step 510) to obtain the rank list. At step 520, the encoded reference data is entropy decoded to obtain the rank number. At step 525, the reference data in the rank list is found using the rank number. At step 530, the decoded reference data is output.

At least one of the methods proposed herein is inspired by the template matching approach. Such method(s) also uses context information of blocks, but the contexts are used to encode the reference data, such as motion vectors or displacement vectors. For the problem mentioned above, under our approach, the problem can be solved by first using image block content rather than context to find a more accurate reference block, and then using the context information of the found reference block to encode the spatial displacement vectors or motion vectors. This would make the disclosed method more accurate than the template matching methods, but more efficient in coding than directly using displacement vectors or motion vectors.

Thus, the present principles provide methods and apparatus to more efficiently encode reference data, such as motion vectors and/or spatial displacement vectors, generated during the video encoding process. The present principles are based on the idea to transform the probability distribution of the original reference data to a new probability distribution of the transformed data that has lower entropy. The lower entropy results in a small number of bits required for coding the transformed reference data according to Shannon's source coding theorem. It is shown that such transformation can be realized by using a search rank list generated by matching image block context features. Moreover, the rank number of the reference block in the rank list is the transformed reference data which has lower entropy.

Let us assume that there is a block-based compression scheme, where an image or video frame is divided into non-overlapping blocks. For each block, reference data such as motion vectors need to be sent to the decoder side. In accordance with the present principles, it is assumed that the reference data is discrete and finite, which is true for motion vectors or displacement vectors.

Traditionally, the reference data is encoded using an entropy coding scheme with a certain assumption about the probability distribution of the data. Let us denote the reference data associated to a block as $M$, where $M$ is a random number that takes a value from the reference data set $\Sigma_M$. The probability distribution of $M$ is $p(M)$, so the entropy of $M$ is $H(M)$. Shannon's source coding says that the minimum number of bits for lossless encoding of the reference data is constrained by the entropy $H(M)$. More formally, let us assume that the reference data $M$ is lossless encoded as a binary number with S number of bits using an optimal encoder. Then Shannon's source coding theorem sets forth the following:

$$H(M) \leq E(S) < H(M) + 1$$

where $E(S)$ is the expectation of S, that is S denotes the number of bits used to encode $M$ with an optimal encoder.

Shannon's source coding theorem tells us that if the encoder is optimal, the only way to further increase the coding efficiency is to reduce the entropy $H(M)$. There could be different ways to reduce the entropy $H(M)$. One way is to find a transformation to transform $M$ to another random variable which has lower entropy. One example is coding by prediction. For example, for motion vectors, the motion vector of a neighboring block can be used to predict the motion vector of the current coding block. If the motion vector of the neighboring block is denoted as $M_N$, and a transformation of the metadata $M$ is created as $M' = M - M_N$, then $M'$ has lower entropy if $M$ and $M_N$

are correlated. Moreover, in this case, $M_N$ is the side information to predict $M$.

Thus, in accordance with the present principles, it is possible to find a transformation that transforms the reference data $M$ using the image content associated with a block as side information. More concretely, let $M$ be the reference data of a block, and $M$ takes a value from a finite metadata set $\Sigma_M$. Also, each block is associated with a certain context feature $F$. One example of the context feature is the set of pixels surrounding the block as shown in FIG. 1. It is assumed there are $N$ blocks as candidates for choosing a particular reference block for a coding block. Therefore, the set of reference data is a natural number set from 1 to $N$, i.e., $\Sigma_M = \{1, 2, ..., N\}$. Since the reference data set is discrete and finite, the reference data can be always mapped to a finite natural number set. For the $i^{th}$ candidate block, there is the context feature $F_i$, and there is a corresponding context feature set for all the candidate reference blocks $\mathcal{F} = \{F_1, F_2, ..., F_N\}$. For the encoding block, it is also associated with a context feature $F_e$.

Our proposed transformation is to search the best-match reference block in the reference data set by calculating the distances between the context feature $F_e$ with all the features in the context feature set $\mathcal{F}$, and then sort the reference data set in an ascending order according to the distances, resulting in a search rank list. As a result, the reference data in $\Sigma_M$ that has the context feature nearest to the feature $F_e$ will be at the top of the search rank list. Assuming the "correct" reference block, which may be obtained by using a certain reliable method such as a direct block match, is actually the $R^{th}$ entry in the search rank list, the rank number $R$ is saved as the encoded reference data. In summary, the proposed process is a transformation that transforms the original reference data to a rank number in the rank list. The rank number also takes the value from a natural number set $\{1, 2, ..., N\}$. As used herein, "direct block match" simply refers to the block matching procedure using in common motion estimation approaches performed in block-based video compression schemes such as, for example, but not limited to, the MPEG-4 AVC Standard. The direct block match or block matching procedure calculates the difference between the current block and a plurality of candidate blocks, and chooses the candidate reference block with the minimum difference as the best match.

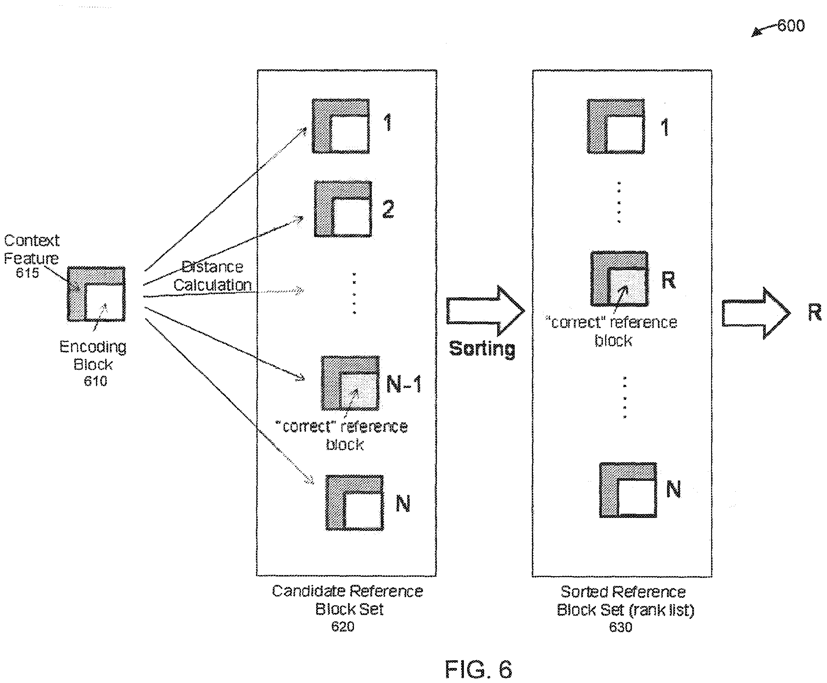

Turning to FIG. 6, an exemplary rank transform for transforming reference data to a rank number is indicated generally by the reference numeral 600. The rank transform 600 involves an encoding block 610 (i.e., a block to be encoded), a context feature 615 for the encoding block 610, a candidate reference block set 620, and a sorted reference block set 630 (i.e., a rank list). The candidate reference blocks in the candidate reference set 620 also include context features (not explicitly labeled with a figure reference numeral).

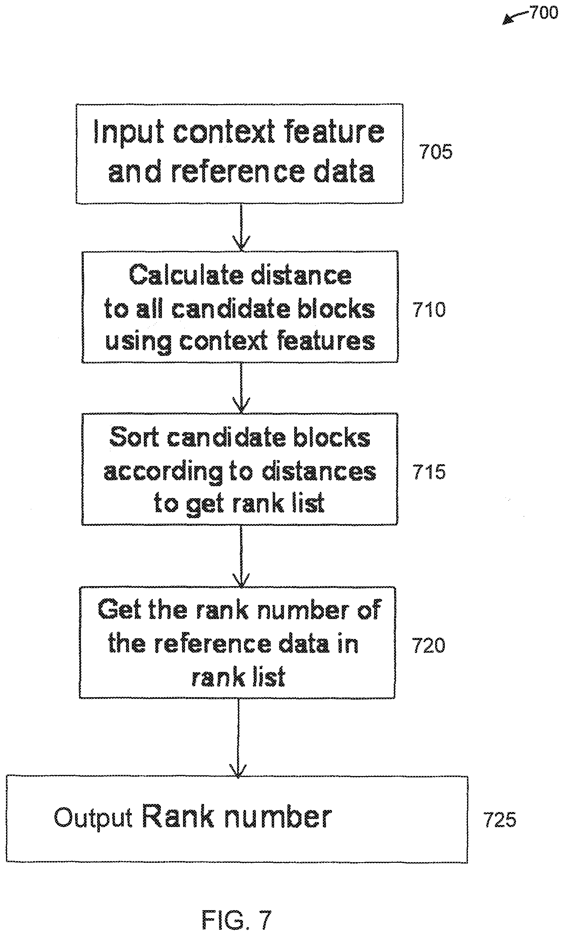

Turning to FIG. 7, an exemplary method for transforming reference data to a rank number is indicated generally by the reference numeral 700. At step 705, a context feature and reference data are input. At step 710, the distance to all candidate blocks is calculating using context features. At step 715, the candidate blocks are sorted according to distances to get the rank list. At step 720, the rank number of the reference data is the rank list is obtained. At step 725, the rank number is output.

The entropy of the transformed rank number R depends on the accuracy and relevance of the context feature *F*. For example, if the context feature is very accurate and relevant such that the context feature of the "correct" reference block is always identical to the context feature of the coding block (therefore the distance should be 0), then the "correct" reference block should be always at the top of the search rank list. As a result, the rank number *R* should be always 1. Therefore, the entropy of *R* is 0, and 0 bits are needed to encode the reference data. That is, it is not necessary to send the reference data, as the reference data is inferred from the context features. This also indicates that the video encoder should be able to find the reference block solely based on the context features and the reference data is not needed. In another scenario, assuming that the context feature is completely irrelevant, therefore the "correct" reference block could be located anywhere in the search rank list. Accordingly, the number of *R* becomes completely random with a uniform distribution in $\Sigma_M$. As a result, log *N* bits are needed to encode *R,* which may be equal to or worse than encoding the original reference data without the above described transformation. The general scenario is in-between these two extreme situations: the entropy of *R* is generally larger than 0 but smaller than log *N*. As a result, the encoding of the transformed data should be more efficient than directly encoding the original reference data, and more reliable than the template-matching methods. The probability distribution of the number *R* is related to the relevance and accuracy of the context features. Assuming the probability distribution of the number *R* is known, then the number *R* could be encoded using a particular entropy coding scheme according to its probability distribution. It has been observed in experiments that in general the probability distribution of *R* is close to a geometric distribution or exponential distribution. If *R* follows the geometric distribution, then it is known to the field of data coding that the optimal prefix code is the Golomb Code. The entropy coding component may be changed according to different probability distributions of the rank number.

**An Example: Encoding Spatial Displacement Vectors**

The spatial displacement vector refers to the relative spatial coordinates between an encoding block and its reference block. In the case of inter-frame prediction or a motion compensated encoding scheme, a spatial displacement vector is actually a motion vector which helps the encoder find a corresponding reference block in the reference frame (e.g., an Intra or I frame in the International Organization for Standardization/International Electrotechnical Commission (ISO/IEC) Moving Picture Experts Group-4 (MPEG-4) Part 10 Advanced Video Coding (AVC) Standard/International Telecommunication Union, Telecommunication Sector (ITU-T) H.264 Recommendation (hereinafter the "MPEG-4 AVC Standard"). In the case of intra-frame block prediction (currently not adopted by the MPEG-4 AVC Standard, but may be adopted in H.265 or beyond), the spatial displacement vector helps the encoder find the corresponding reference block in the current encoding frame (FIG. 1). In both cases, the displacement vector is represented as a 2D vector ($\delta x$, $\delta y$), which is the relative coordinates. The displacement vector in general is calculated by block matching. For example, in spatial prediction schemes, the encoding block could be matched to every possible block in the decoded area (FIG. 1) by calculating the distance between the encoding block and the candidate blocks and finding the reference block with the minimum distance. The relative coordinate between the encoding block and the reference block is the spatial displacement vector. The spatial displacement vector should be sent to the decoder so that the decoder can find the correct reference block during the decoding process.

In the proposed scheme, the displacement vector can be encoded by the above mentioned process. First, the surrounding pixels of a block are used as a context feature. However, in spatial prediction, only the top and left side of the block is used as a context feature because the right and bottom side of the current block have not yet been decoded during the decoding process. The context feature of the current block is then used to match the context features of all the candidate reference blocks. The results are sorted in ascending order, and the position (i.e., the rank) of the reference block in the sorted list is taken as the transformed displacement vector. Finally, entropy coding is applied to encode the rank number. The decoding process is a reverse procedure. The decoder has received the rank number by the time the corresponding block is to be decoded (also interchangeably referred to herein as the "decoding block"). The context feature of the decoding block is extracted and matched with the context features of all the permissible reference blocks within the decoded area. The results are sorted in an ascending order, and the received rank number is used to retrieve the reference block from the rank list.

These and other features and advantages of the present principles may be readily ascertained by one of ordinary skill in the pertinent art based on the teachings herein. It is to be understood that the teachings of the present principles may be implemented in various forms of hardware, software, firmware, special purpose processors, or combinations thereof.

Most preferably, the teachings of the present principles are implemented as a combination of hardware and software. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings are preferably implemented in software, the actual connections between the system components or the process function blocks may differ depending upon the manner in which the present principles are programmed. Given the teachings herein, one of ordinary skill in the pertinent art will be able to contemplate these and similar implementations or configurations of the present principles.

Although the illustrative embodiments have been described herein with reference to the accompanying drawings, it is to be understood that the present principles is not limited to those precise embodiments, and that various changes and modifications may be effected therein by one of ordinary skill in the pertinent art without departing from the scope of the present principles. All such changes and modifications are intended to be included within the scope of the present principles as set forth in the appended claims.

**Claims**

1. A method, comprising:

   respectively transforming (315) reference data for each of a plurality of candidate reference blocks with respect to a current block to be encoded into a respective rank number based on a context feature of said current block with respect to said context feature of each of said plurality of candidate reference blocks;
   determining (320) a rank number for said current block, said rank number corresponding to a particular one of said plurality of candidate reference blocks to be actually used as a reference block to encode said current block; and
   entropy encoding (325) said determined rank number for said current block, wherein said entropy encoding uses an entropy encoding scheme selected according to a probability distribution of the determined rank number for said current block.

2. The method of claim 1, wherein said reference data comprises at least one of motion vectors, spatial displacement vectors, and disparity values.

3. The method of claim 1, wherein said reference data for each of said plurality of candidate reference blocks with respect to said current block is respectively transformed into said respective rank number by calculating a respective distance between said current block and a respective one of said plurality of candidate reference blocks based on said context feature of said current block with respect to said context feature of said respective one of said plurality of candidate blocks, repeating said calculating of said respective distance for remaining ones of said plurality of candidate reference blocks to obtain a plurality of respective distances, and sorting said plurality of candidate reference blocks based on said plurality of respective distances to obtain a rank list having said plurality of respective rank numbers specified therein.

4. The method of claim 3, wherein a particular one of said plurality of candidate reference blocks to be actually used as a reference block to encode said current block is identified based on a respective one of said rank numbers corresponding thereto indicating a closest match between said particular one of said plurality of candidate reference blocks and said current block based on a shortest one of said plurality of respective distances.

5. The method of claim 1, wherein said context feature for said current block comprises pixels surrounding said current block, and said context feature for each of said plurality of candidate reference blocks respectively comprises pixels respectively surrounding there around.

6. The method of claim 1, wherein said context feature of each of said plurality of candidate reference blocks form a searchable context feature set that is compared to said context feature of said current block.

7. The method of claim 1, wherein said context feature of said current block is matched to said context feature of each of said plurality of candidate reference blocks based on respective distances there between.

8. An apparatus, comprising:

   means (210) for respectively transforming reference data for each of a plurality of candidate reference blocks with respect to a current block to be encoded into a respective rank number based on a context feature of said current block with respect to said context feature of each of said plurality of candidate reference blocks, said transforming means (210) determining a rank number for said current block, said rank number corresponding to a particular one of said plurality of candidate reference blocks to be actually used as a reference block to encode said current block; and

means (220) for entropy encoding said determined rank number for said current block, wherein said means for entropy encoding uses an entropy encoding scheme selected according to a probability distribution of the determined rank number for said current block.

9. The apparatus of claim 8, wherein said reference data comprises at least one of motion vectors, spatial displacement vectors, and disparity values.

10. The apparatus of claim 8, wherein said reference data for each of said plurality of candidate reference blocks with respect to said current block is respectively transformed into said respective rank number by calculating a respective distance between said current block and a respective one of said plurality of candidate reference blocks based on said context feature of said current block with respect to said context feature of said respective one of said plurality of candidate blocks, repeating said calculating of said respective distance for remaining ones of said plurality of candidate reference blocks to obtain a plurality of respective distances, and sorting said plurality of candidate reference blocks based on said plurality of respective distances to obtain a rank list having said plurality of respective rank numbers specified therein.

11. The apparatus of claim 10, wherein said particular one of said plurality of candidate reference blocks to be actually used as said reference block to encode said current block is identified based on a respective one of said rank numbers corresponding thereto indicating a closest match between said particular one of said plurality of candidate reference blocks and said current block based on a shortest one of said plurality of respective distances.

12. The apparatus of claim 8, wherein said context feature for said current block comprises pixels surrounding said current block, and said context feature for each of said plurality of candidate reference blocks respectively comprises pixels respectively surrounding there around.

13. The apparatus of claim 8, wherein said context feature of each of said plurality of candidate reference blocks form a searchable context feature set that is compared to said context feature of said current block.

14. The apparatus of claim 8, wherein said context feature of said current block is matched to said context feature of each of said plurality of candidate reference blocks based on respective distances there between.

15. A non-transitory computer readable storage medium comprising program code, which when executed on a processor, comprises:

respectively transforming (315) reference data for each of a plurality of candidate reference blocks with respect to a current block to be encoded into a respective rank number based on a context feature of said current block with respect to said context feature of each of said plurality of candidate reference blocks;

determining (320) a rank number for said current block, said rank number corresponding to a particular one of said plurality of candidate reference blocks to be actually used as a reference block to encode said current block; and

entropy encoding (325) said determined rank number for said current block, wherein said entropy encoding uses an entropy encoding scheme selected according to a probability distribution of the determined rank number for said current block.

**Patentansprüche**

1. Verfahren, das umfasst:

jeweiliges Transformieren (315) von Referenzdaten für jeden von mehreren Kandidatenreferenzblöcken mit Bezug auf einen gegenwärtigen zu codierenden Block in eine jeweilige Rangnummer auf der Grundlage eines Kontextmerkmals des gegenwärtigen Blocks mit Bezug auf das Kontextmerkmal jedes der mehreren Kandidatenreferenzblöcke;

Bestimmen (320) einer Rangnummer für den gegenwärtigen Block, wobei die Rangnummer einem bestimmten der mehreren Kandidatenreferenzblöcke, der tatsächlich als ein Referenzblock zum Codieren des gegenwärtigen Blocks verwendet werden soll, entspricht; und

Entropiecodieren (325) der bestimmten Rangnummer für den gegenwärtigen Block, wobei das Entropiecodieren ein Entropiecodierungsschema verwendet, das in Übereinstimmung mit einer Wahrscheinlichkeitsverteilung der bestimmten Rangnummer für den gegenwärtigen Block ausgewählt wird.

2. Verfahren nach Anspruch 1, wobei die Referenzdaten Bewegungsvektoren und/oder räumliche Verschiebungsvektoren und/oder Disparitätswerte umfassen.

3. Verfahren nach Anspruch 1, wobei die Referenzdaten für jeden der mehreren Kandidatenreferenzblöcke mit Bezug auf den gegenwärtigen Block jeweils durch Berechnen einer jeweiligen Entfernung zwischen dem gegenwärtigen Block und einem jeweiligen der mehreren Kandidatenreferenzblöcke auf der Grundlage des Kontextmerkmals des gegenwärtigen Blocks mit Bezug auf das Kontextmerkmal des jeweiligen der mehreren Kandidatenreferenzblöcke, durch Wiederholen des Berechnens der jeweiligen Entfernung für die verbleibenden der mehreren Kandidatenreferenzblöcke, um mehrere jeweilige Entfernungen zu erhalten, und durch Sortieren der mehreren Kandidatenreferenzblöcke auf der Grundlage der mehreren jeweiligen Entfernungen, um eine Rangliste, in der die mehreren jeweiligen Rangnummern spezifiziert sind, zu erhalten, in die jeweilige Rangnummer transformiert werden.

4. Verfahren nach Anspruch 3, wobei ein bestimmter der mehreren Kandidatenreferenzblöcke, der tatsächlich als ein Referenzblock zum Codieren des gegenwärtigen Blocks verwendet werden soll, auf der Grundlage einer jeweiligen der ihm entsprechenden Rangnummern identifiziert wird, die auf der Grundlage einer kürzesten der mehreren jeweiligen Entfernungen eine engste Übereinstimmung zwischen dem bestimmten der mehreren Kandidatenreferenzblöcke und dem gegenwärtigen Block angibt.

5. Verfahren nach Anspruch 1, wobei das Kontextmerkmal für den gegenwärtigen Block Pixel umfasst, die den gegenwärtigen Block umgeben, und wobei das Kontextmerkmal für jeden der mehreren Kandidatenreferenzblöcke jeweils Pixel umfasst, die diese jeweils darum umgeben.

6. Verfahren nach Anspruch 1, wobei die Kontextmerkmale jedes der mehreren Kandidatenreferenzblöcke einen durchsuchbaren Kontextmerkmalsatz bilden, der mit dem Kontextmerkmal des gegenwärtigen Blocks verglichen wird.

7. Verfahren nach Anspruch 1, wobei das Kontextmerkmal des gegenwärtigen Blocks auf der Grundlage jeweiliger Entfernungen dazwischen mit dem Kontextmerkmal jedes der mehreren Kandidatenreferenzblöcke auf Gleichheit geprüft wird.

8. Vorrichtung, die umfasst:

ein Mittel (210) zum jeweiligen Transformieren von Referenzdaten für jeden von mehreren Kandidatenreferenzblöcken mit Bezug auf einen gegenwärtigen zu codierenden Block in eine jeweilige Rangnummer auf der Grundlage eines Kontextmerkmals des gegenwärtigen Blocks mit Bezug auf das Kontextmerkmal jedes der mehreren Kandidatenreferenzblöcke, wobei das Transformationsmittel (210) eine Rangnummer für den gegenwärtigen Block bestimmt, wobei die Rangnummer einem bestimmten der mehreren Kandidatenreferenzblöcke, der tatsächlich als ein Referenzblock zum Codieren des gegenwärtigen Blocks verwendet werden soll, entspricht; und
ein Mittel (220) zum Entropiecodieren der bestimmten Rangnummer für den gegenwärtigen Block, wobei das Mittel zum Entropiecodieren ein Entropiecodierungsschema verwendet, das in Übereinstimmung mit einer Wahrscheinlichkeitsverteilung der bestimmten Rangnummer für den gegenwärtigen Block ausgewählt wird.

9. Vorrichtung nach Anspruch 8, wobei die Referenzdaten Bewegungsvektoren und/oder räumliche Verschiebungsvektoren und/oder Disparitätswerte umfassen.

10. Vorrichtung nach Anspruch 8, wobei die Referenzdaten für jeden der mehreren Kandidatenreferenzblöcke mit Bezug auf den gegenwärtigen Block jeweils durch Berechnen einer jeweiligen Entfernung zwischen dem gegenwärtigen Block und einem jeweiligen der mehreren Kandidatenreferenzblöcke auf der Grundlage des Kontextmerkmals des gegenwärtigen Blocks mit Bezug auf das Kontextmerkmal des jeweiligen der mehreren Kandidatenreferenzblöcke, durch Wiederholen des Berechnens der jeweiligen Entfernung für die verbleibenden der mehreren Kandidatenreferenzblöcke, um mehrere jeweilige Entfernungen zu erhalten, und durch Sortieren der mehreren Kandidatenreferenzblöcke auf der Grundlage der mehreren jeweiligen Entfernungen, um eine Rangliste, in der die mehreren jeweiligen Rangnummern spezifiziert sind, zu erhalten, in die jeweilige Rangnummer transformiert werden.

11. Vorrichtung nach Anspruch 10, wobei der bestimmte der mehreren Kandidatenreferenzblöcke, der tatsächlich als der Referenzblock zum Codieren des gegenwärtigen Blocks verwendet werden soll, auf der Grundlage einer jeweiligen der ihm entsprechenden Rangnummern identifiziert wird, die auf der Grundlage einer kürzesten der mehreren jeweiligen Entfernungen eine engste Übereinstimmung zwischen dem bestimmten der mehreren Kandidatenreferenzblöcke und dem gegenwärtigen Block angibt.

12. Vorrichtung nach Anspruch 8, wobei das Kontextmerkmal für den gegenwärtigen Block Pixel umfasst, die den gegenwärtigen Block umgeben, und wobei das Kontextmerkmal für jeden der mehreren Kandidatenreferenzblöcke jeweils Pixel umfasst, die diese jeweils darum umgeben.

13. Vorrichtung nach Anspruch 8, wobei die Kontextmerkmale jedes der mehreren Kandidatenreferenzblöcke einen durchsuchbaren Kontextmerkmalsatz bilden, der mit dem Kontextmerkmal des gegenwärtigen Blocks verglichen wird.

14. Vorrichtung nach Anspruch 8, wobei das Kontextmerkmal des gegenwärtigen Blocks auf der Grundlage jeweiliger Entfernungen dazwischen mit dem Kontextmerkmal jedes der mehreren Kandidatenreferenzblöcke auf Gleichheit geprüft wird.

15. Nichttransitorisches computerlesbares Speichermedium, das Programmcode umfasst, der, wenn er in einem Prozessor ausgeführt wird, umfasst:

jeweiliges Transformieren (315) von Referenzdaten für jeden von mehreren Kandidatenreferenzblöcken mit Bezug auf einen gegenwärtigen zu codierenden Block in eine jeweilige Rangnummer auf der Grundlage eines Kontextmerkmals des gegenwärtigen Blocks mit Bezug auf das Kontextmerkmal jedes der mehreren Kandidatenreferenzblöcke;

Bestimmen (320) einer Rangnummer für den gegenwärtigen Block, wobei die Rangnummer einem bestimmten der mehreren Kandidatenreferenzblöcke, der tatsächlich als ein Referenzblock zum Codieren des gegenwärtigen Blocks verwendet werden soll, entspricht; und

Entropiecodieren (325) der bestimmten Rangnummer für den gegenwärtigen Block, wobei das Entropiecodieren ein Entropiecodierungsschema verwendet, das in Übereinstimmung mit einer Wahrscheinlichkeitsverteilung der bestimmten Rangnummer für den gegenwärtigen Block ausgewählt wird.

**Revendications**

1. Procédé comprenant :

la transformation respective (315) de données de référence pour chacun d'une pluralité de blocs de référence candidats par rapport à un bloc courant à coder en un numéro de classement respectif selon une caractéristique de contexte dudit bloc courant par rapport à ladite caractéristique de contexte de chacun de ladite pluralité de blocs de référence candidats ;

la détermination (320) d'un numéro de classement pour ledit bloc courant, ledit numéro de classement correspondant à un bloc de référence candidat spécifique de ladite pluralité de blocs de référence candidats à utiliser effectivement comme bloc de référence pour coder ledit bloc courant ; et

le codage entropique (325) dudit numéro de classement déterminé pour ledit bloc courant, où ledit codage entropique utilise un schéma de codage entropique sélectionné en fonction d'une distribution de probabilité du numéro de classement déterminé pour ledit bloc courant.

2. Procédé selon la revendication 1, dans lequel lesdites données de référence comprennent au moins des vecteurs de mouvement, des vecteurs de déplacement spatial ou des valeurs de disparité.

3. Procédé selon la revendication 1, dans lequel lesdites données de référence pour chacun de ladite pluralité de blocs de référence candidats par rapport audit bloc courant est transformé respectivement en ledit numéro de classement respectif par le calcul d'une distance respective entre ledit bloc courant et un bloc de référence candidat respectif de ladite pluralité de blocs de référence candidats selon ladite caractéristique de contexte dudit bloc courant par rapport à ladite caractéristique de contexte dudit un bloc candidat respectif de ladite pluralité de blocs candidats, la répétition dudit calcul de ladite distance respective pour les autres blocs de référence candidats de ladite pluralité de blocs de référence candidats pour obtenir une pluralité de distances respectives et le tri de ladite pluralité de blocs de référence candidates selon ladite pluralité de distances respectives pour obtenir une liste de classements dans laquelle est spécifiée ladite pluralité de numéros de classement respectifs.

4. Procédé selon la revendication 3, dans lequel un bloc de référence candidat spécifique de ladite pluralité de blocs de référence candidats à utiliser effectivement comme bloc de référence pour coder ledit bloc courant est identifié selon un numéro de classement respectif desdits numéros de classement correspondants indiquant la correspondance la plus proche entre ledit bloc de référence candidat spécifique de ladite pluralité de blocs de référence candidats et ledit bloc courant selon la distance la plus courte de ladite pluralité de distances respectives.

5. Procédé selon la revendication 1, dans lequel ladite caractéristique de contexte pour ledit bloc courant comprend les pixels entourant ledit bloc courant et ladite caractéristique de contexte pour chacun de ladite pluralité de blocs de référence candidats comprend respectivement les pixels qui l'entourent respectivement.

6. Procédé selon la revendication 1, dans lequel ladite caractéristique de contexte de chacun de ladite pluralité de blocs de référence candidats forme un ensemble de caractéristiques de contexte pouvant faire l'objet de recherches qui est comparé à ladite caractéristique de contexte dudit bloc courant.

7. Procédé selon la revendication 1, dans lequel ladite caractéristique de contexte dudit bloc courant est associée à ladite caractéristique de contexte de chacun de ladite pluralité de blocs de référence candidats en fonction des distances respectives qui les séparent.

8. Appareil comprenant :

un moyen (210) pour transformer respectivement des données de référence pour chacun d'une pluralité de blocs de référence candidats par rapport à un bloc courant à coder en un numéro de classement respectif selon une caractéristique de contexte dudit bloc courant par rapport à ladite caractéristique de contexte de chacun de ladite pluralité de blocs de référence candidats, ledit moyen de transformation (210) déterminant un numéro de classement pour ledit bloc courant, ledit numéro de classement correspondant à un bloc de référence candidat spécifique de ladite pluralité de blocs de référence candidats à utiliser effectivement comme bloc de référence pour coder ledit bloc courant ; et un moyen (220) pour procéder au codage entropique dudit numéro de classement déterminé pour ledit bloc courant, où ledit moyen de codage entropique utilise un schéma de codage entropique sélectionné en fonction de la distribution de probabilité du numéro de classement déterminé pour ledit bloc courant.

9. Appareil selon la revendication 8, dans lequel lesdites données de référence comprennent au moins des vecteurs de mouvement, des vecteurs de déplacement spatial ou des valeurs de disparité.

10. Appareil selon la revendication 8, dans lequel lesdites données de référence pour chacun de ladite pluralité de blocs de référence candidats par rapport audit bloc courant est transformé respectivement en ledit numéro de classement respectif par le calcul d'une distance respective entre ledit bloc courant et un bloc de référence candidat respectif de ladite pluralité de blocs de référence candidats selon ladite caractéristique de contexte dudit bloc courant par rapport à ladite caractéristique de contexte dudit un bloc candidat respectif de ladite pluralité de blocs candidats, la répétition dudit calcul de ladite distance respective pour les autres blocs de référence candidats de ladite pluralité de blocs de référence candidats pour obtenir une pluralité de distances respectives et le tri de ladite pluralité de blocs de référence candidates selon ladite pluralité de distances respectives pour obtenir une liste de classements dans laquelle est spécifiée ladite pluralité de numéros de classement respectifs.

11. Appareil selon la revendication 10, dans lequel ledit bloc de référence candidat spécifique de ladite pluralité de blocs de référence candidats à utiliser effectivement comme ledit bloc de référence pour coder ledit bloc courant est identifié selon un numéro de classement respectif desdits numéros de classement correspondants indiquant la correspondance la plus proche entre ledit bloc de référence candidat spécifique de ladite pluralité de blocs de référence candidats et ledit bloc courant selon la distance la plus courte de ladite pluralité de distances respectives.

12. Appareil selon la revendication 8, dans lequel ladite caractéristique de contexte pour ledit bloc courant comprend les pixels entourant ledit bloc courant et ladite caractéristique de contexte pour chacun de ladite pluralité de blocs de référence candidats comprend respectivement les pixels qui l'entourent respectivement.

13. Appareil selon la revendication 8, dans lequel ladite caractéristique de contexte de chacun de ladite pluralité de blocs de référence candidats forme un ensemble de caractéristiques de contexte pouvant faire l'objet de recherches qui est comparé à ladite caractéristique de contexte dudit bloc courant.

14. Appareil selon la revendication 8, dans lequel ladite caractéristique de contexte dudit bloc courant est associée à ladite caractéristique de contexte de chacun de ladite pluralité de blocs de référence candidats en fonction des distances respectives qui les séparent.

15. Support de stockage non transitoire lisible sur ordinateur comprenant un code de programme qui, lorsqu'il est exécuté sur un processeur, comprend :

la transformation respective (315) de données de référence pour chacun d'une pluralité de blocs de référence candidats par rapport à un bloc courant à coder en un numéro de classement respectif selon une caractéristique de contexte dudit bloc courant par rapport à ladite caractéristique de contexte de chacun de ladite pluralité de blocs de référence candidats ;

la détermination (320) d'un numéro de classement pour ledit bloc courant, ledit numéro de classement correspondant à un bloc de référence candidat spécifique de ladite pluralité de blocs de référence candidats à utiliser effectivement comme bloc de référence pour coder ledit bloc courant ; et

le codage entropique (325) dudit numéro de classement déterminé pour ledit bloc courant, où ledit codage entropique utilise un schéma de codage entropique sélectionné en fonction d'une distribution de probabilité du numéro de classement déterminé pour ledit bloc courant.

FIG. 1

EP 2 614 644 B1

← 200

| 210 | 220 |
|---|---|

Reference
Data  →  | Rank
Transform |  →  | Entropy
Coding |  →  Encoded
Reference
Data

FIG. 2

300

Input context feature
and reference data — 305

Calculate distance
to all candidate blocks
using context features — 310

Sort candidate blocks
according to distances
to get rank list — 315

Get the rank number of
the reference data in
rank list — 320

Entropy encode the
rank number — 325

Output Encoded reference data — 330

FIG. 3

EP 2 614 644 B1

FIG. 4

500

```
┌─────────────────────────────────┐
│      Input context feature      │
│   and encoded reference data    │  505
└─────────────────────────────────┘
               │
               ▼
┌─────────────────────────────────┐
│        Calculate distance       │
│     to all candidate blocks     │  510
│       using context features    │
└─────────────────────────────────┘
               │
               ▼
┌─────────────────────────────────┐
│       Sort candidate blocks     │
│    according to distances       │  515
│        to get rank list         │
└─────────────────────────────────┘
               │
               ▼
┌─────────────────────────────────┐
│        Entropy decode           │
│   encoded reference data        │  520
│       to get rank number        │
└─────────────────────────────────┘
               │
               ▼
┌─────────────────────────────────┐
│       Find reference data in    │
│      rank list using rank       │  525
│            number               │
└─────────────────────────────────┘
               │
               ▼
┌──────────────────────────────────────────┐
│     Output Decoded reference data         │  530
└──────────────────────────────────────────┘
```

FIG. 5

FIG. 6

700

```
┌─────────────────────────┐
│   Input context feature │  705
│   and reference data    │
└─────────────────────────┘
            │
            ▼
┌─────────────────────────┐
│    Calculate distance   │
│  to all candidate blocks│  710
│    using context features│
└─────────────────────────┘
            │
            ▼
┌─────────────────────────┐
│   Sort candidate blocks │
│ according to distances  │  715
│     to get rank list    │
└─────────────────────────┘
            │
            ▼
┌─────────────────────────┐
│   Get the rank number of│
│    the reference data in│  720
│        rank list        │
└─────────────────────────┘
            │
            ▼
┌───────────────────────────────────┐
│   Output Rank number              │  725
└───────────────────────────────────┘
```

FIG. 7

**EP 2 614 644 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61403138 A
- US 00010711 W
- US 11000117 W
- US 2009180538 A1
- FR 2941581 A1